# EUROPÄISCHE PATENTSCHRIFT

(11) **EP 0 818 424 B1**
(45) Veröffentlichungstag und Bekanntmachung des Hinweises auf die Patenterteilung: **14.11.2001**
(21) Anmeldenummer: 97110466.6
(22) Anmeldetag: 26.06.1997
(51) Int. Cl.: C02F 11/18, C02F 11/14

(54) **Verfahren zur Behandlung von Schlamm mit organischen Anteilen insbesondere Klärschlamm**
Process for treating organic sludge, especially sewage sludge
Procédé pour le traitement des boues organiques, notamment des boues des eaux d'égout

(30) Priorität: 11.07.1996 DE 19627875
(43) Veröffentlichungstag der Anmeldung: 14.01.1998
(73) Patentinhaber: BSBG Bremer Sonderabfallberatungsgesellschaft mbH, 28195 Bremen (DE)
(72) Erfinder: Setzermann, Uwe, Prof. Dr. Dr., 27751 Delmenhorst (DE)
(74) Vertreter: von Ahsen, Erwin-Detlef, Dipl.-Ing.

(56) Entgegenhaltungen:
- DE-A- 2 035 855
- DE-A- 2 746 752
- DE-A- 3 121 405
- US-A- 4 190 528

## Beschreibung

Die Erfindung betrifft ein Verfahren zur Behandlung von Schlämmen mit organischen Anteilen, insbesondere Klärschlämmen, bei dem zur Behandlung der Zellwände (Zelldesintegration) der organischen Anteile durch Zugabe von Ammoniak oder Ammoniakwasser ein hoher pH-Wert eingestellt wird, bei dem zur Behandlung der Zellwände eine Temperatur größer 120 °C eingestellt wird, und bei dem zur Behandlung der Zellwände der Systemdruck erhöht wird.

Ein solches Verfahren ist aus der US A 4 190 528 bekannt. Ein weiteres Verfahren zur Behandlung von Schlämmen ist durch Prof. Dr. Peter M. Kunz und Dipl.-Ing. (FH) Steffen Wagner, "Ergebnisse und Perspektiven aus Untersuchungen zur Klärschlammdesintegration", awt - abwassertechnik, Heft 1/1994, Seiten 50 bis 57, bekannt geworden.

Bei der Reinigung von Abwässern und anderen Prozessen entstehen Schlämme, die einen hohen Anteil organischer Substanzen aufweisen können. So enthält beispielsweise der bei kommunalen Abwasserreinigungsanlagen entstehende sogenannte Vorklärschlamm oder Primärklärschlamm ca. 70 % organische Anteile. Der in der biologischen Stufe durch Mikroorganismen entstehende Überschuß- oder Sekundärschlamm hat einen Anteil von bis zu 85 % organischer Anteile. Weiterer Schlamm kann bei der weitergehenden Abwasserreinigung durch biologische Maßnahmen zur Beseitigung von Phosphaten entstehen. Dieser Schlamm wird auch Tertiärschlamm genannt.

Prinzipiell stehen für die Zelldesintegration der Schlämme chemische, mechanische und enzymatische Verfahren zur Verfügung. Ziel dieser Verfahren ist es, die zu entsorgende Restschlammenge zu reduzieren.

Die beiden vorstehenden genannten Verfahren gehören zu den chemischen Verfahren. Der Klärschlamm wird bei diesen bekannten Verfahren mit Ammoniak bzw. mit Natriumhydroxid verseift. Infolge des hierdurch hervorgerufenen osmotischen Schocks werden die Zellwände zerstört. Hierdurch kann die Zellflüssigkeit austreten. Dabei werden auch Enzyme aus dem Zellinneren frei, die für weitere Behandlungsstufen der Schlammstabilisierung, wie etwa in einem Anaerobfermenter, benutzt werden können. Die durch das Zerplatzen der Zellhüllen entstehenden Zellhüllenfragmente können beispielsweise abgefiltert und anderweitig behandelt werden. Nachteilig bei dem letztgenannten Verfahren ist, daß die Zugabe von Natriumhydroxid zu einer Versalzung des Restschlamms führt. Der Restschlamm ist daher kaum noch für eine weitere Nutzung durch Kompostieren oder als Dünger in der Landwirtschaft nutzbar. Der Restschlamm muß deponiert werden, was erhebliche Kosten verursacht.

Die mechanischen Verfahren beruhen auf der Wirkung von Scherkräften. Hierfür werden beispielsweise Kugelmühlen eingesetzt. Weiterhin werden Hochdruckhomogenisatoren verwendet. Letztere erfordern Drücke von über 200 bar entsprechend 20 MPa. Die beste Ausbeute wird bei Drücken zwischen 40 bis 60 MPa erreicht. Nachteilig ist hier jedoch die begrenzte Kapazität und der je nach Zellart nur 10 bis 60 %-ige Zellaufschluß (Zelldesintegrationsgrad) pro Durchlauf, so daß mehrere Durchläufe erforderlich sind.

In enzymatischen Verfahren können Zellen mittels geeigneter zellwandlösender Enzyme aufgeschlossen werden. Diese Verfahren sind zwar schonend, aber sehr teuer, da die Enzyme nicht wiedergewonnen werden können.

All den oben beschriebenen Verfahren ist gemeinsam, daß ein hoher Zeitaufwand für die Zelldesintegration erforderlich ist. Hierdurch sind bei vorgegebenem Klärschlammvolumen entsprechend große Reaktoren erforderlich.

Der Erfindung liegt das Problem zugrunde, ein Verfahren für die Behandlung von Schlämmen mit organischen Anteilen vorzuschlagen, bei dem bei Vermeidung einer überhöhten Salzbelastung eine sehr kurze Einwirkzeit bei möglichst hohem Wirkungsgrad (Zelldesintegrationsgrad) ausreicht.

Erfindungsgemäß wird dieses Problem dadurch gelöst, daß bei dem Verfahren der eingangs genannten Art ein pH-Wert größer 11 eingestellt wird, daß die Zelldesintegration bei einem Systemdruck von 1 bis 2 MPa über Normaldruck durchgeführt wird, und daß der Systemdruck zur Behandlung der Zellwände plötzlich reduziert wird.

Durch das erfindungsgemäße Verfahren werden auf überraschend einfache Weise mehrere der bei den bekannten Zelldesintegrationsverfahren auftretenden Nachteile vermieden. Die Zellwände platzen nicht, sondern sie werden aufgelöst. Dieser Vorgang erfolgt aufgrund der erfindungsgemäßen Prozeßbedingungen in sehr kurzer Zeit, so daß hier von einem "Kurzzeitaufschluß" der Zellwände gesprochen werden kann. Das Ammoniak läßt sich im Anschluß an die Zelldesintegration abtreiben und dabei nahezu vollständig entfernen. Hierdurch wird eine erhöhte Salzbelastung des verbleibenden Schlamms (Restschlamm) vermieden. Der Restschlamm kann hierdurch kostengünstig entsorgt werden. Bei dem Systemdruck von 1 bis 2 MPa über Normaldruck kann der zu behandelnde Schlamm eine größere Menge Ammoniak aufnehmen. Dadurch und dadurch, daß der Systemdruck zur Behandlung der Zellwände plötzlich, vorzugsweise auf Normaldruck, reduziert wird, wird eine weitere Verkürzung der Behandlungszeit bei gleichzeitiger Erhöhung des Zelldesintegrationsgrades erreicht.

Bei einer Weiterbildung der Erfindung wird der Systemdruck zur Behandlung der Zellwände plötzlich auf Normaldruck reduziert. Dadurch wird einerseits ein besonders hoher Wirkungsgrad in kurzer Zeit erzielt.

Ein optimales Ergebnis läßt sich erzielen, wenn die Zelldesintegration mit Ammoniak bzw. Ammoniakwasser in einem Zelldesintegrator bei einem Druck von 1 bis 2 MPa über Normaldruck und einer Temperatur von über 120 °C, vorzugsweise 150 bis 180 °C, insbesondere 160 °C, erfolgt, wobei der Schlamm anschließend plötzlich unter gleichzeitiger Kühlung entspannt wird. Die Behandlungszeit des Schlamms läßt sich hierdurch auf wenige Minuten reduzieren. Das Volumenverhältnis des Zelldesintegrators für die Zelldesintegration zum nachfolgenden Anaerobfermenter kann so auf bis zu 1:28.800 gebracht werden, wenn eine mittlere Verweilzeit von 20 Tagen für den Anaerobfermenter angenommen wird. Berücksichtigt man die beschleunigte Anaerobreaktion durch die bessere Verwertbarkeit der organischen Bestandteile nach der Zelldesintegration, ist ein Verhältnis von 1:10.000 erreichbar. Für einen Anaerobfermenter von 10.000 m³ ist somit ein Zelldesintegrator von 1 m³ ausreichend. Eine Anlage zur Durchführung des Verfahrens kann daher kostengünstig hergestellt werden.

Weitere Merkmale der Erfindung beziehen sich auf die Ausgestaltung des Verfahrens, wie es nachfolgend am Beispiel einer Klärschlammdesintegrationsanlage anhand der Zeichnung näher beschrieben wird. In dieser zeigen:

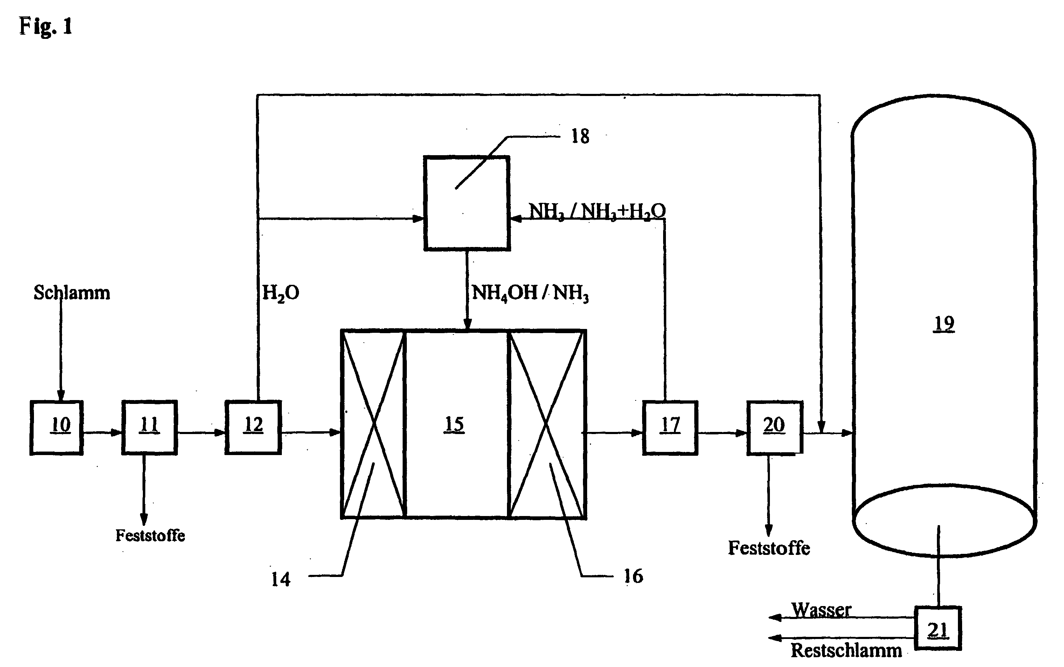

- Fig. 1: ein Fließschema für eine Schlammbehandlung nach dem erfindungsgemäßen Verfahren,
- Fig. 2: ein Fließschema für eine Schlammbehandlung nach Fig. 1 mit Restschlammrückführung.

Der z. B. von einer aeroben Reinigungsstufe einer kommunalen Abwasserreinungungsanlage kommende Klärschlamm wird zunächst in einem Speicher 10 zwischengelagert. Durch ein Sieb 11 oder dergleichen werden zunächst grobe, feste Bestandteile entfernt. Sind im Schlamm auch Schwermetallverbindungen vorhanden, so werden hier auch feinere anorganische Feststoffe, wie beispielsweise Sand, durch mechanische Trennverfahren, z. B. Schraubenklassierung oder Hydrozyklon, entfernt.

Anschließend wird aus dem Klärschlamm bei 12 ein Teil des Wassers soweit durch mechanische Trennverfahren entfernt, daß sich ein organischer Trockensubstanzgehalt des Klärschlamms von etwa 5 bis 10% einstellt. Vorzugsweise wird der Trockensubstanzgehalt auf 7 % eingestellt. Alternativ kann der Trockensubstanzgehalt aber auch soweit erhöht werden, daß die Grenze der Förderfähigkeit des Klärschlamms erreicht wird. Dieses ist bei einem Trocksubstanzgehalt von etwa 20 % der Fall.

Der Klärschlamm wird nun in einen Zelldesintegrator 13 gefördert. In einer ersten Stufe 14 wird der Druck auf 1 bis 2 MPa über Normaldruck und die Temperatur auf über 120 °C erhöht. Besonders günstig ist ein Temperaturbereich von 150 °C bis 180 °C. Zum Beheizen des Zelldesintegrators 13 kann beispielsweise überhitzter Dampf zugeführt werden.

In einer zweiten Stufe 15 des Zelldesintegrators 13 wird Ammoniak bzw. Ammoniakwasser zugeführt und so ein für die Reaktion erforderlicher pH-Wert größer 11 eingestellt. Optional kann das Ammoniak bzw. das Ammoniakwasser vor dem Zuführen auf die Reaktionstemperatur erwärmt werden. Durch die in der zweiten Stufe 15 des Zelldesintegrators 13 vorhandenen Reaktionsbegingungen wird eine sehr schnelle Auflösung der Zellwände bewirkt. Vorzugsweise wird die Zelldesintegration bei einer Temperatur von 160 °C und einem pH-Wert von größer als 11 durchgeführt.

Nach einer Verweilzeit von 50 bis 60 Sekunden in der zweiten Stufe 15 wird in einer dritten Stufe 16 eine Abkühlung mit anschließender plötzlicher Druckreduzierung auf Normaldruck vorgenommen. Hierdurch werden die Zellwände verbleibender Zellen zu einem überwiegenden Teil zerstört. Ein Zelldesintegrationsgrad von 80 bis 100 % ist hierdurch ohne weiteres erzielbar.

Damit während der plötzlichen Druckreduzierung das im Schlamm enthaltene Wasser nicht verdampft, ist eine gleichzeitige Kühlung erforderlich. Alternativ kann die plötzliche Druckreduzierung auch auf einen Restdruck erfolgen, der oberhalb des Dampfdrucks von Wassers für die jeweilige Resttemperatur nach der Druckreduzierung liegt.

Die Verwendung einer Prozeßtemperatur im Zelldesintegrator 13 von über 120 °C kann aufgrund der kurzen Verweilzeit ohne weiteres erfolgen, ohne daß für eine spätere anaerobe Schlammbehandlung erforderliche Inhaltsstoffe der Zellen zerstört werden.

Der für die Zelldesintegration benötigte pH-Wert von größer 11 wird durch die Zugabe von 2,7 Litern eines 25 %-igen Ammoniakwassers oder einer vergleichbaren Menge Ammoniaks je 1 Kilogramm organischer Klärschlammtrockensubstanz bei einem Trockensubstanzgehalt von 7 % erzielt.

Im Anschluß an den Zelldesintegrator 13 wird bei 17 das Ammoniak abgetrieben. Nach einer ersten Alternative wird hierfür eine Resttemperatur des Klärschlamms von unterhalb des Siedepunktes des Wassers eingestellt. Vorzugsweise erfolgt der Ammoniakabtrieb bei einer Resttemperatur von 50 bis 90 °C. Das so gewonnene Ammoniak wird entweder direkt in den Zelldesintegrator 13 zurückgeführt oder zunächst bei 18 in Wasser zur Bildung von Ammoniakwasser gelöst. Dabei kann zumindest ein Teil des bei der Wasserabtrennung 12 gewonnenen Wassers verwendet werden.

Nach einer zweiten Alternative wird der Ammoniakabtrieb bei einer Resttemperatur oberhalb der Siedetemperatur des Wassers durchgeführt. Hierbei entsteht neben dem Ammoniak auch Wasserdampf. In diesem Fall wird das Ammoniak-Wasser-Gemisch bei 18 auskondensiert und das so gewonnene Ammoniakwasser in den Zelldesintegrator 13 zurückgeführt.

Der Vorteil dieser Vorgehensweise liegt darin, daß das Ammoniakwasser bereits eine erhöhte Temperatur besitzt. Um die richtige Konzentration des Ammoniakwassers einzustellen, kann auch hierbei ein Teil des bei der Wasserabtrennung 12 gewonnenen Wassers verwendet werden. Für den später folgenden Anaerobfermenter 19 muß der Klärschlamm allerdings weiter gekühlt werden. Die dabei anfallende Abwärme kann aber vorteilhaft für eine Vorwärmung des dem Zelldesintegrator 13 zuzuführenden Klärschlamms genutzt werden.

In jedem Fall lassen sich etwa 95 % des Ammoniaks austreiben und in den Zelldesintegrator 13 zurückführen.

Ein weiterer Vorteil dieses Zelldesintegrationsverfahrens liegt darin, daß quasi nebenbei auch etwa im Schlamm enthaltene Schwermetalle im alkalischen Medium des Zelldesintegrators 13 als Schwermetallhydroxide in Lösung gehen. Diese können nach erfolgtem Ammoniakabtrieb ausgefällt und bei 20 beispielsweise durch Sieben, Filtern oder Zentrifugieren abgeschieden werden. Zusätzlich oder alternativ können hier auch etwa noch verbliebene unbeschädigte Zellen abgefiltert und in den Zelldesintegrator 13 zurückgeführt werden.

Im Anschluß an die Feststoffabscheidung 20 wird das bei der Wasserabtrennung 12 angefallene und nicht zur Bildung von Ammoniakwasser verwendete Wasser wieder zugeführt. Dabei wird ein für die Anaerobfermentation im Anaerobfermenter 19 geeigneter pH-Wert von 6 bis 8 eingestellt. Der Klärschlamm wird nun in den Anaerobfermenter 19 gepumpt.

Aufgrund der sich durch die Zelldesintegration einstellenden Prozeßbedingungen, nämlich des im Schlamm enthaltenen geringen Feststoffanteils und die Möglichkeit, Schlamm mit erhöhter Temperatur für die Anaerobfermentation zu verwenden, kann der Anaerobfermenter 19 alternativ mit thermophilen und/oder mit immobilisierten Mikroorganismen betrieben werden.

Bei der Anaerobfermentation entsteht sogenanntes Biogas, das zur Energiegewinnung verwendet wird. Aufgrund der durch die Zelldesintegration verbesserten Verwertbarkeit des Schlamms bei der Anaerobfermentation fällt zum einen eine größere Menge Biogas an und zum anderen ist die Anaerobreaktion beschleunigt.

Die aus dem Biogas gewonnene Energie wird zum Beheizen des Zelldesintegrators 13 verwendet. Überschußenergie wird verkauft. Dem Anaerobfermenter 19 wird schließlich Wasser und Restschlamm entnommen, die bei 21 getrennt werden. Aufgrund der oben beschriebenen Behandlung des Klärschlamms reduziert sich die Menge des anfallenden Restschlamms. Im idealen Fall, d. h. vollkommener Aufschluß des organischen Materials im Zelldesintegrator 13 und Abtrennung der groben Bestandteile sowie feine anorganische Feststoffe bei 11, verbleiben im Restschlamm nur die im Anaerobfermenter 19 gebildeten Mikroorganismen. Dies sind etwa 5 % der Masse der umgewandelten Inhaltsstoffe.

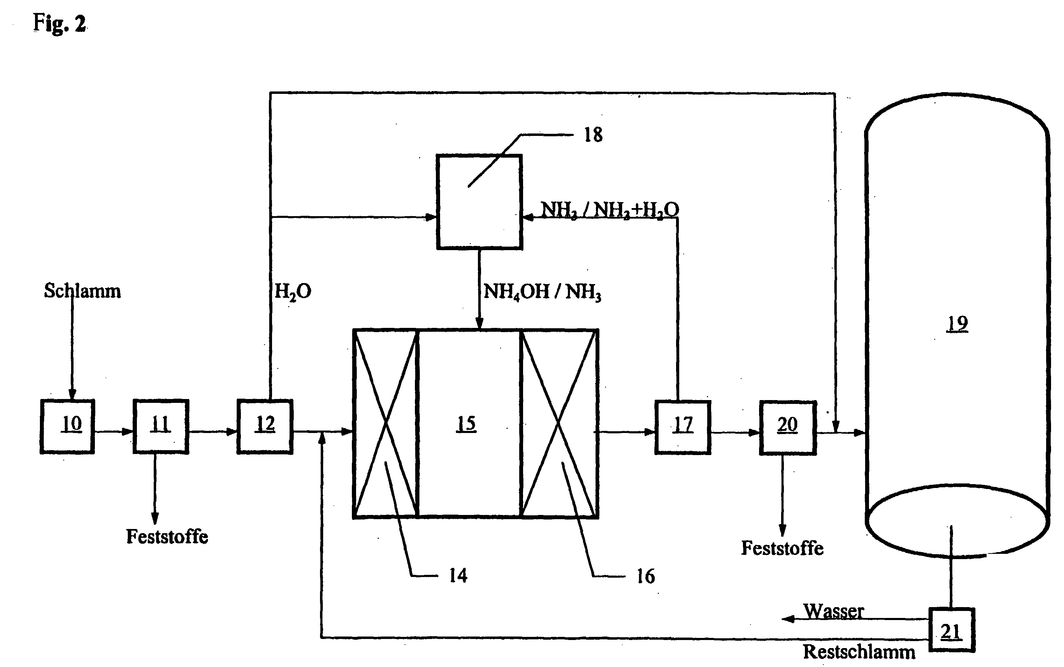

Nachdem der Restschlamm der Restschlamm-Wasser-Abtrennung 21 unterzogen worden ist, kann dieser, statt entsorgt zu werden, auch dem Zelldesintegrator 13 zugeführt werden, um die im Anaerobfermenter 19 gebildeten Mikroorganismen aufzuschließen. Dieses ist in Fig. 2 näher dargestellt.

Das erfindungsgemäße Verfahren ist selbstverständlich nicht auf die Behandlung von Klärschlämmen kommunaler oder anderer Abwasserreinigungsanlagen beschränkt, sondern ist zur Behandlung aller Schlämme mit organischen Anteilen geeignet.

### Bezugszeichenliste:

- 10: Speicher
- 11: Feststoffabscheider
- 12: Wasserabtrennung
- 13: Zelldesintegrator
- 14: erste Stufe
- 15: zweite Stufe
- 16: dritte Stufe
- 17: Ammoniakabtrieb
- 18: Mischer/Kondensator
- 19: Anaerobfermenter
- 20: Feststoffabscheider
- 21: Restschlamm-Wasser-Trennung

## Patentansprüche

1. Verfahren zur Behandlung von Schlämmen mit organischen Anteilen, insbesondere Klärschlämmen,
bei dem zur Behandlung der Zellwände (Zelldesintegration) der organischen Anteile durch Zugabe von Ammoniak oder Ammoniakwasser ein hoher pH-Wert eingestellt wird,
bei dem zur Behandlung der Zellwände eine Temperatur größer 120°C eingestellt wird,
und bei dem zur Behandlung der Zellwände der Systemdruck erhöht wird,
**dadurch gekennzeichnet,**
**daß** ein pH-Wert größer 11 eingestellt wird,
**daß** die Zelldesintegration bei einem Systemdruck von 1 bis 2 MPa über Normaldruck durchgeführt wird,
und **daß** der Systemdruck zur Behandlung der Zellwände plötzlich reduziert wird.

2. Verfahren nach Anspruch 1, **dadurch gekennzeichnet, daß** der Systemdruck zur Behandlung der Zellwände plötzlich auf Normaldruck reduziert wird.

3. Verfahren nach Anspruch 1 oder 2, **dadurch gekennzeichnet, daß** der Schlamm in einen Zelldesintegrator (13) gefördert, der Systemdruck auf 1 bis 2 MPa über Normaldruck gebracht, anschließend oder gleichzeitig die Temperatur auf über 120 °C, vorzugsweise 150 bis 180 °C, insbesondere 160 °C, erhöht, sodann durch Zugabe von Ammoniak bzw. Ammoniakwasser der pH-Wert größer 11 eingestellt, und schließlich der Systemdruck plötzlich auf Normaldruck oder einen leicht erhöhten Druck bei gleichzeitiger oder nach vorheriger Kühlung reduziert wird.

4. Verfahren nach einem der Ansprüche 1 bis 3, **dadurch gekennzeichnet, daß** der Zelldesintegration Schlamm aus einer aeroben Reinigungsstufe einer Abwasserreinigungsanlage zugeführt wird, der vorzugsweise zunächst von groben festen Bestandteilen beispielsweise durch Sieben befreit wird.

5. Verfahren nach Anspruch 4, **dadurch gekennzeichnet, daß** der Trockensubstanzgehalt des Schlamms auf 5 bis 10 %, vorzugsweise 7 %, eingestellt und das dabei gewonnene Wasser zumindest teilweise zur Herstellung des Ammoniakwassers für die Zelldesintegration verwendet wird, wobei der Trockensubstanzgehalt des Schlamms vorzugsweise soweit erhöht wird, daß er gerade noch förderfähig ist, insbesondere auf einem Trockensubstanzgehalt von etwa 20 %.

6. Verfahren nach einem der Ansprüche 1 bis 5, **dadurch gekennzeichnet, daß** nach der Zelldesintegration ein Ammoniakabtrieb (17) durchgeführt wird;
- entweder bei einer Temperatur unterhalb der Siedetemperatur von Wasser, insbesondere 50 bis 90 °C, vorzugsweise bei 70 °C;
- oder einer Temperatur oberhalb der Siedetemperatur von Wasser, wobei gleichzeitig Wasserdampf ausgetrieben und das so entstehende Ammoniak-Wasserdampf-Gemisch anschließend zu Ammoniakwasser auskondensiert wird.

7. Verfahren nach Anspruch 6, **dadurch gekennzeichnet, daß** das durch den Ammoniakabtrieb (17) gewonnene Ammoniak bzw. Ammoniakwasser in den Zelldesintegrator (13) zurückgeführt wird.

8. Verfahren nach einem der Ansprüche 1 bis 7, **dadurch gekennzeichnet, daß** nach der Zelldesintegration im Schlamm verbliebene bzw. gebildete Feststoffanteile, insbesondere bei der Zelldesintegration gebildete Schwermetallhydroxide, abgetrennt werden, beispielsweise durch Ausfällen und Filtern.

9. Verfahren nach einem der Ansprüche 1 bis 8, **dadurch gekennzeichnet, daß** wenige, bei der Zelldesintegration nicht zerstörte Zellen abgefiltert oder auf andere Weise abgetrennt und in den Zelldesintegrator (13) zurückgeführt werden.

10. Verfahren nach einem der Ansprüche 1 bis 9, **dadurch gekennzeichnet, daß** der Schlamm nach der Zelldesintegration in einem Anaerobfermenter (19), insbesondere mit thermophilen und/oder immobilisierten Mikroorganismen stabilisiert wird.

11. Verfahren nach Anspruch 10, **dadurch gekennzeichnet, daß** dem bei der Stabilisierung im Anaerobfermenter (19) entstehenden Restschlamm Wasser entzogen und der Restschlamm anschließend dem Zelldesintegrator (13) zugeführt wird.

## Claims

1. Process for the treatment of organic sludge, especially sewage sludge,
in which a higher pH value is established for the treatment of the cell walls (cell disintegration) of the organic components, by the addition of ammonia or ammoniacal water,
in which a temperature higher than 120°C is established for the treatment of the cell walls,
and in which the system pressure is increased for the treatment of the cell walls,
thereby **characterized,**
that a pH value higher than 11 is established,
that the cell disintegration is carried out at a system pressure of 1 to 2 MPa above normal pressure,
and that for treatment of the cells walls the system pressure is suddenly reduced.

2. Process according to Claim 1, thereby **characterized,** that for the treatment of the cell walls the system pressure is suddenly reduced to normal pressure.

3. Process according to Claim 1 or 2, thereby **characterized,** that the sludge is conveyed into a cell desintegrator (13), the system pressure is brought to 1 or 2 MPa above normal pressure, the temperature is subsequently or simultaneously increased to above 120°C, preferably 150 to 180°C, especially 160°C, the pH value is then established at above 11 by the addition of ammonia or ammoniacal water, and finally the system pressure is suddenly reduced to normal pressure or a slightly raised pressure with simultaneous or after previous cooling.

4. Process according to any of Claims 1 to 3, thereby **characterized,** that the cell disintegration sludge, which preferably is first freed from coarse solid constituents, for example by straining, is conveyed in from an aerobic purification stage in a waste water treatment plant.

5. Process according to Claim 4, thereby **characterized,** that the dry substance content of the sludge is adjusted to 5 to 10%, preferably 7%, and the water thus obtained is at least partially used for the production of the ammoniacal water for the cell disintegration, while the dry substance content of the sludge preferably is increased to the extent that it is still just conveyable, especially to a dry substance content of approximately 20%.

6. Process according to any of Claims 1 to 5, thereby **characterized,** that after the cell disintegration, ammonia expulsion (17) is carried out:
- either at a temperature below the boiling point of water, especially 50 to 90°C, preferably at 70°C;
- or at a temperature above the boiling point of water, whereby water vapour is simultaneously expelled and the ammonia/water-vapour mixture thus produced is subsequently condensed out to form ammoniacal water.

7. Process according to Claim 6, thereby **characterized,** that the ammonia and/or ammoniacal water obtained from the ammonia expulsion (17) is recycled to the cell disintegrator (13).

8. Process according to any of Claims 1 to 7, thereby **characterized,** that solid components remaining and/or formed in the sludge after the cell disintegration, especially heavy metal hydroxides formed during the cell disintegration, are separated off, for example by precipitation and filtering.

9. Process according to any of Claims 1 to 8, thereby **characterized,** that small quantities of cells not destroyed after the cell disintegration are filtered off or separated by another method and recycled to the cell disintegrator (13).

10. Process according to any of Claims 1 to 9, thereby **characterized,** that the sludge after the cell disintegration is stabilized in an anaerobic fermenter (19), especially with thermophilic and/or immobilized microorganisms.

11. Process according to Claim 10, thereby **characterized,** that water is removed from the residual sludge produced during stabilization in the anaerobic fermenter (19), and subsequently the residual sludge is recycled to the cell disintegrator (13).

## Revendications

1. Procédé de traitement de boue avec des parties organiques, notamment des boues d'égout, lors du traitement de la membrane cellulaire, des parties organiques, par l'ajout d'ammoniac ou d'eau ammoniacale, on règle une haute valeur de PH, et pour le traitement, une température plus grande que120 °C est réglée, et en ce que lors du traitement, de la membrane de cellule, la pression du système devient plus importante, **caractérisé en**
**ce qu'**une valeur de PH supérieur à 11 est réglée,
ce que le désintegration de cellule fonctionne à une pression de système de 1 jusqu'à 2 MPa , au -delà la pression normale,
et ce que le système réduit subitement la pression, lors du traitement des membranes de cellules.

2. Procédé suivant la revendication 1, **caractérisé en ce que** la pression de système pendant le traitement de la membrane de cellule est réduite subitement à pression normale .

3. Procédé suivant la revendication 1 et 2, **caractérisé en ce que**, la boue stimulée dans un désintegrateur de cellule, la pression de système sur 1 jusqu'à 2 MPa , au delà la pression normale , juste après ou simultanément,la température est reglée sur plus grand que 120 ° C, de préférence 150 jusqu'à 180 °C, en particulier 160 °C , la valeur de PH 11 est réglé, par l'ajout notamment d"ammoniac ou d'eau ammoniacale, et, enfin, la pression de système est subitement ramener à la pression normale ,ou à une pression légèrement plus élevée,soit simultané, ou après un refroidissement précédent.

4. Procédé suivant l'une des revendications 1 à 3, **caractérisé en ce que** la désintégration cellulaire de la boue,d'une installation d'épuration des eaux usées pour un degré de nettoyage aérobie, qui est incorporés,de préférence les parties grossières, sont avant tout, par exemple, retirés par filtrage.

5. Procédé suivant la revendication 4, **caractérisé en ce que** la répartition de matière sèche dans la boue de 5 à 10% ,est réglée de préférence à 7%, et que le gain d'eau ainsi obtenu, est au moins partiellement utilisé pour la fabrication de l'eau ammoniacal nécessaire, pour une désintégration cellulaires ,ce pour quoi, la substance sèche de la boue, de préférence augmente,et **en ce qu'**il est encore à la limite,d'évolution,en particulier jusqu'à environ 20% de cette substance sèche.

6. Procédé suivant l'une des revendications 1 à 5, **caractérisé en ce qu'**après la désintégration cellulaire, un écoulement d' ammoniac est exécutée à une température au-dessous de la température d'ébullition de l'eau, en particulier de 50 jusqu'à 90°C; de préférence à 70°C; ou une température au-dessus de la température de fusion de l'eau, **en ce que**, simultanément, le mélange de vapeur d'eau et vapeur d'eau d'ammoniacale est expulsé, et apparaît, ensuite, à l'état liquéfiés d'eau ammoniacale.

7. Procédé suivant la revendication 6, **caractérisé en ce que** l'eau ammoniacal gagnée à l'extraction de l'ammoniac (17) sera reconduite dans le désintégrateur de cellule (13).

8. Procédé selon l'une des revendications 1 à 7, **caractérisé en ce qu'**après la désintégration cellulaire de la boue résiduelle, les corps solides, en particulier les métaux lourds formés, sont extrait par chute, ou filtrage.

9. Procédé suivant l'une des revendications 1 à 7, **caractérisé en ce que**, lors de la désintégration cellulaire, le peu de cellules non détruites seront filtrés ou séparés d'une autre manière et réintroduite dans le désintégrateur cellulaire.

10. Procédé suivant l'une des revendications 1 à 9, **caractérisé en ce que** la boue est stabilisée, après la désintégration cellulaire par un fermentateur anaérobie, en particulier avec des thermophiles et/ou des micro-organismes immobiles.

11. Procédé suivant la revendication 10, **caractérisé en ce qu'** à la stabilisation dans le fermentateur anaérobie (19), l'eau est retirée et la boue résiduelle présente, retourne ensuite, au désintégrateur de cellule (13).
